# NEW EUROPEAN PATENT SPECIFICATION

(11) **EP 0 191 522 B2**
(45) Date of publication and mention of the opposition decision: **18.12.1996**
(45) Mention of the grant of the patent: 10.07.1991
(21) Application number: 86200136.9
(22) Date of filing: 31.01.1986
(51) Int. Cl.: C01B 3/34, C01B 3/44

(54) **Process for the preparation of hydrogen-containing gas from hydrocarbons and steam and/optionally CO2**
Verfahren zur Erzeugung eines Wasserstoff enthaltenden Gases aus Kohlenwasserstoffen, Wasserdampf und/ggf. Kohlendioxid
Procédé de préparation d'un gaz contenant de l'hydrogène à partir d'hydrocarbures et de vapeur d'eau et/le cas échéant d'anhydride carbonique

(30) Priority: 13.02.1985 NL 8500401
(43) Date of publication of application: 20.08.1986
(73) Proprietor: SHELL INTERNATIONALE RESEARCH MAATSCHAPPIJ B.V., 2596 HR Den Haag (NL)
(72) Inventor: van der Burgt, Maarten Johannes, NL-2596 HR The Hague (NL)
(74) Representative: Spierenburg, Jan

(56) References cited:
- EP-A- 0 163 385
- EP-A- 0 168 892
- EP-A- 0 178 007
- GB-A- 973 755
- GB-A- 1 191 358
- US-A- 1 711 036
- US-A- 1 736 065
- US-A- 2 467 966
- US-A- 2 482 866
- US-A- 2 681 272
- US-A- 3 138 438
- US-A- 3 524 819
- US-A- 4 244 811
- US-A- 4 268 412
- Improvements and Developments of the Lurgi Methanol Process, Supp et al., Chem. Economy and Engineering Review, May 1985 Vol. 17, no. 5, pages 18-22
- "Fluidization Engineering"; D.Kunii and O. Levenspiel, pages 152-155
- "Fluidization"; J.F.Davidson and D.Harrison, pages 295-297
- "Combustion, Flames and Explosions of Gases", B.Lewis and G. von Elbe, pages 279, 284, 440 and 460
- "Gasification of peat-A Literature Review"; E. Leppamaki, et al.
- "Fluidisaiton and Fluid-Particle Systems"; Zenz and Othmer pages 32-35
- Development of Beacon Technology, Quarterly Report Febr.-April 1984: DOE/MC/14400-18
- Quarterly Report DOE/MC/104400-16

## Description

The invention relates to a process for the preparation of hydrogen-containing gas from hydrocarbons and steam and, optionally, CO₂.

As is known, hydrocarbons and steam and, optionally, CO₂ can be converted into a gas mixture consisting substantially of H₂ and CO, known as synthesis gas. Such processes are endothermic.

If it is desired to use synthesis gas for the preparation of organic compounds, the molar H₂/CO ratio often needs to be changed when the ratio of the synthesis gas as obtained does not correspond with the optimum ratio for the preparation of the intended organic product.

In the preparation of synthesis gas from CH₄ and steam, for example, H₂ and CO are usually obtained in a molar ratio of H₂ : CO ≧ 3, whereas for the preparation of, for example, methanol or middle distillates, a synthesis gas with a molar ratio of H₂ : CO of about 2 is preferable.

It has now been found that hydrogen-containing gas with the desired molar H₂/CO ratio can be obtained advantageously by using in a particular manner a part of the products formed in the conversion of hydrocarbons and steam and, optionally, CO₂ for generating the heat required for the conversion.

The invention therefore relates to a process for the preparation of hydrogen-containing gas from hydrocarbons and an external source of steam and, optionally, CO₂ wherein the hydrocarbons and the steam and, optionally, the CO₂ are continuously converted at elevated temperature and pressure into H₂ and CO by continuously contacting the reactants in at least one reaction zone with at least one fluidized bed of heated solid catalysts and/or inert particles, which are then led continuously to a heating zone where they are continuously heated in a fluidized state by gas heated by combustion of a part of the obtained H₂ and, optionally, of at least a part of the obtained CO with oxygen-containing gas which combustion takes place in the heating zone, and which are finally led continuously back to the reaction zone(s) where they are again contacted with the reactants, and wherein 20-70%v of the H₂ obtained from the reaction zone is led to the heating zone to be combusted therein, and the heating zone provides substantially all the heat for the process.

Hydrogen-containing gas is understood to include substantially pure hydrogen and synthesis gas in any molar H₂/CO ratio, except for the ratio in which the synthesis gas is obtained by contacting the reactants with the solid particles. If it is desired to prepare pure hydrogen, the total amount of CO obtained from the conversion of hydrocarbons and steam and CO₂ is burned in the heating zone. When preparing synthesis gas with a particular composition, preferably only a part of the CO or H₂ obtained is burned.

In principle, steam, CO₂ or a mixture thereof can be used in any desired ratio. Preferably, steam is used, possibly supplemented by CO₂ formed as byproduct in the process according to the invention.

In principle, any known hydrocarbons or mixtures of hydrocarbons can be used. Also biomass containing up to 50%, and even up to 60%, by weight of oxygen, such as lignocellulose (e.g. wood or sawdust), leaves, plants, grasses, chopped straw and other (agricultural) waste materials, peat and/or brown coal can be suitably employed. Preferably, liquid and/or gaseous hydrocarbons are used. The process according to the invention is particularly suitable for the conversion of natural gas or methane. Preferably, the feedstock is first subjected to a treatment to remove sulphur and other inorganic substances. The process according to the invention will hereinafter be discussed with methane as the hydrocarbon used, without wishing to limit the present invention to this hydrocarbon.

The present process can be carried out in one or more reaction zones. Employment of two reaction zones is a particular embodiment of the process according to the invention and will be discussed later.

Any reactor known in the art for converting methane and steam can be used as reaction zone, the reactor being provided with suitable means for fluidizing solid particles and keeping them in a fluidized state. Examples of such reactors are tank reactors and tubular reactors. Preferably a tubular reactor, and in particular a riser reactor, is used.

The process according to the invention is performed continuously. The solid particles are continuously led from the reaction zone to the heating zone and from the heating zone to the reaction zone; the reactants are continuously fed into the reaction zone with continuous discharge of the reaction product formed, and the oxygen-containing gas and the relevant part of the reaction product are continuously fed into the heating zone with the gas formed being continuously removed.

The reaction between CH₄ and steam and the combustion of a part of the H₂ formed and, optionally of the CO formed or of the total amount of CO (hereinafter simply called "fuel") take place in the presence of a fluidized bed of solid particles. Preferably, the solid particles are fluidized and kept in a fluidized state by the reactants or the components present during the combustion.

The space velocities of CH₄, steam, oxygen-containing gas and fuel can vary within wide limits. The space velocity will normally lie between 5 and 20 Nm³/l packed solid particles/h for CH₄, between 5 and 60 Nm³/l packed solid particles/h for steam, between 20 and 50 Nm³/l packed solid particles/h for the oxygen-containing gas and between 5 and 20 Nm³/l packed solid particles/h for the fuel. The volume of the fluidized solid particles as such is about 0.05-0.3 m³/m³ reactor volume.

The pressure at which the conversion of methane and steam takes place lies suitably between 1 and 50 bar and preferably between 5 and 25 bar.

The solid particles can be catalysts and/or inert particles.

Any catalyst known in the art for the conversion of methane and steam into synthesis gas can be employed as catalyst, nickel-containing catalysts being preferred.

Any solid particles can be employed as inert solid particles, for example, sand, alumina, zirconia and exhausted cracking catalyst used for catalytic cracking, the exhausted cracking catalyst being preferred.

Preferably, inert particles are used, because regeneration of the catalyst particles, which lost their activity in the course of time, can then be avoided.

The size of the particles can vary within wide limits, provided that the particles can be fluidized and kept in a fluidized state. The size of the particles generally lies between 20 and 500 um.

The speed at which the solid particles must be circulated between the reaction zone and the heating zone depends, amongst other things, on the speed at which methane and steam are fed into the reaction zone. The speed of the solid particles will generally lie between 2 and 40 m/s, and preferably between 4 and 20 m/s, in the tubes of a riser reactor and between 0.2 and 0.8 m/s in fluidized beds.

The temperature at which methane and steam are converted can vary within wide limits. In general, this temperature lies between 700 and 1500° C. If catalyst particles are employed, the temperature is preferably between 800 and 900° C, whereas if inert particles are employed, it is preferably between 1200 and 1400° C. The higher temperature needed for the conversion of methane and steam into synthesis gas in the presence of inert particles compared with the conversion in the presence of catalyst particles is more than compensated for by the fact that no catalyst is needed, with the accompanying need for regeneration. Moreover, in many cases less CO₂ is formed as byproduct if inert particles are employed.

The steam required can, if the hydrogen-containing gas is used for the preparation of methanol or middle distillates, be obtained from steam produced during the preparation of methanol or middle distillates.

After the reaction of CH₄ and steam, the synthesis gas obtained is removed from the reaction zone. Subsequently, H₂ and CO are separated or a part of the H₂ or a part of the CO is separated from the synthesis gas. How much H₂ and/or CO needs to be separated from the synthesis gas is dependent on the molar ratio of H₂ and CO in the synthesis gas obtained, which in turn depends on the hydrocarbons used and on the molar H₂/CO ratio required in the hydrogen-containing gas. If methane is used and it is desired to prepare, for example, methanol or middle distillates from the hydrogen-containing gas, about 1/3 of the H₂ will have to be separated from the synthesis gas. Preferably, 20-70%v and in particular 25-40%v of the H₂ formed is separated and led to the heating zone.

If, after being discharged from the reaction zone, the synthesis gas still contains unconverted methane, this methane can be separated and led to the separated fraction intended as fuel. The separation of the fraction intended as fuel and any unconverted methane can take place in a conventional way, for example by means of membranes or by means of a "pressure swing absorber". Similarly, unconverted methane can be separated from the product obtained in the reaction zone and led to the reaction zone. In this case, the separation can suitably take place by dephlegmation or distillation.

After this separation, the hydrogen-containing gas obtained can be used for the intended purpose, if desired after being appropriately treated in the usual way, for example by removal of any CO₂ formed as byproduct, which, if desired, can be led back to the reaction zone.

The fuel is led to the heating zone where it is burned with oxygen-containing gas in the presence of a fluidized bed of solid particles. These particles originate from the reaction zone and, after having been brought into contact with methane and oxygen-containing gas, are continuously led to the heating zone. In the heating zone the particles are heated by the combustion of the fuel.

The transport of the particles from the reaction zone to the heating zone can take place by gravity if the discharge opening of the solid particles from the reaction zone is located at a higher point than the inlet opening for those particles into the heating zone, or by means of a carrier gas, for which purposes fuel or oxygen-containing gas being led to the heating zone can very suitably be used.

The oxygen-containing gas and/or the fuel are preferably also used as a means of fluidizing and keeping fluidized the solid particles in the heating zone. The combustion then takes place in the fluidized bed, so that the solid particles are heated in an efficient manner.

As an oxygen-containing gas, a gas can be used with an oxygen content varying from 10%v to 100%v. Preferably, air is used.

If the fuel contains unconverted methane, a sub-stoichiometric quantity of oxygen is preferably introduced into the heating zone, so that methane is at least partly converted into carbon, which is adsorbed by the solid particles and which, after the solid particles have been led to the reaction zone, is converted with the aid of steam into H₂ and CO. In this way, the available quantity of carbon-containing material is used to the best effect.

The heating zone can consist of a heating boiler known in the art, provided with suitable means for fluidizing solid particles and maintaining them in a fluidized state. Preferably, a tubular reactor is used as heating zone.

The flue gas formed during the combustion is continuously removed from the top of the heating zone. If the fuel consisted of only H₂ and substantially pure oxygen was used for the combustion, the flue gas, which then consists of steam, can be led back to the reaction zone.

After the solid particles have been heated in the above-described manner, they are led to the reaction zone. Gravity can be used for this purpose if the discharge opening for the solid particles from the heating zone is located at a higher point than the inlet opening of those particles in the reaction zone. The particles can also be transported to the reaction zone with the aid of a gas, preferably with the aid of one or more of the reactants.

If, according to the process of the invention, synthesis gas is prepared with an H₂/CO ratio of about 2 on a basis of methane and steam, then (apart from side reactions in which, for example, CO₂ can be formed in the reaction zone) the following main reactions take place:

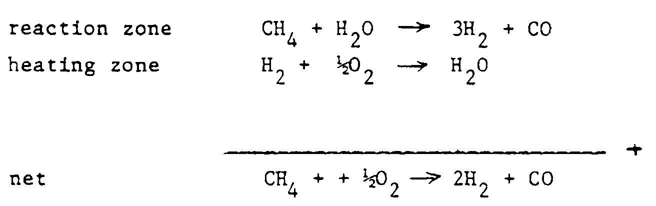

In this chosen example, in which it was assumed that synthesis gas with an H₂/CO molar ratio of 2 was to be obtained from methane and steam, the desired synthesis gas is prepared by a process which, overall, is exothermic (-277.81 kJ/mol). Since in this example the quantity of carbon monoxide and thus, in fact, the number of carbon and oxygen atoms in the reactants forms the limiting factor, it is advantageous to use 1/3 of the hydrogen as fuel instead of a part of the methane that could in principle also serve as a fuel here. By using a part of the hydrogen obtained in the reaction zone for generating the quantity of energy needed in the reaction zone, the methane remains available as a source of carbon. The process according to the invention is efficient, both from an energy point of view and as regards the material balance.

Since energy losses will occur in practice, it may happen that the part of the synthesis gas that is used as fuel is insufficient to provide the energy needed for the conversion of methane and steam. This will be particularly the case if the desired H₂/CO ratio is near 3. In that case, other fuel, for example methane or other hydrocarbons or the byproduct of a hydrocarbon synthesis, should be added.

In practice, the quantity of other fuel needing to be added if it is desired to prepare a hydrogen-containing gas with a molar H₂/CO ratio of 2 from methane or natural gas will not need to contribute more than 30% of the required quantity of heat.

As already mentioned, several, and preferably two, reaction zones can be used. In this case as well, tubular reactors are preferably employed. The pressure, the temperature and the space velocities will in this case usually be within the previously specified limits. If two reaction zones are used, CH₄ is thermally or catalytically, preferably thermally, converted into carbon and hydrogen in the first reaction zone, and the carbon obtained in the first reaction zone is converted with steam into synthesis gas in the second reaction zone.

The circulation of the solid, preferably inert, particles can be performed in two ways. Firstly, a part of the heated solid particles can be led in the above-described way to the first reaction zone, while the other part of those particles is led in the same way to the second reaction zone. The carbon obtained in the first reaction zone is led, together with the solid particles, via the heating zone to the second reaction zone. Secondly, the solid particles from the heating zone can first be led to the first reaction zone, then to the second reaction zone, and finally back to the heating zone. The last embodiment has the advantage that carbon that has deposited on the solid particles can react with steam in the second reaction zone without first having to pass the heating zone, with the chance that the carbon might burn therein fully or partly. Combustion of the carbon on the solid particles in the combustion zone can be prevented by burning H₂ in the heating zone stoichoimetrically or sub-stoichiometrically as desired.

The embodiment with two reaction zones has the advantage that pure H₂ is obtained (2 mol H₂ per mol added CH₄) in the first reaction zone, and H₂ and CO in a molar ratio of 1 is obtained in the second reaction zone. If it is desired to prepare synthesis gas with a molar ratio of H₂ : CO of about 2, this can be achieved in a simple manner by adding half the H₂ obtained in the first reactor to the synthesis gas obtained in the second reaction zone. The other half is then led as fuel to the heating zone. In an analogous manner, any molar ratio of H₂ : CO greater than 1 can be obtained.

The process according to the invention will now be explained further with reference to three schematically represented embodiments, which do not in any way limit the present invention.

Figure 1 shows an embodiment in which one reaction zone is used.

Figures 2 and 3 show embodiments based on two reaction zones.

The reaction zones shown schematically are tubular reactors, each provided with means for fluidizing solid particles and keeping them in a fluidized state. Such reactors are known in other fields of technology, such as catalytic cracking. The heating zones shown schematically are also provided with means for fluidizing solid particles and keeping them in a fluidized state.

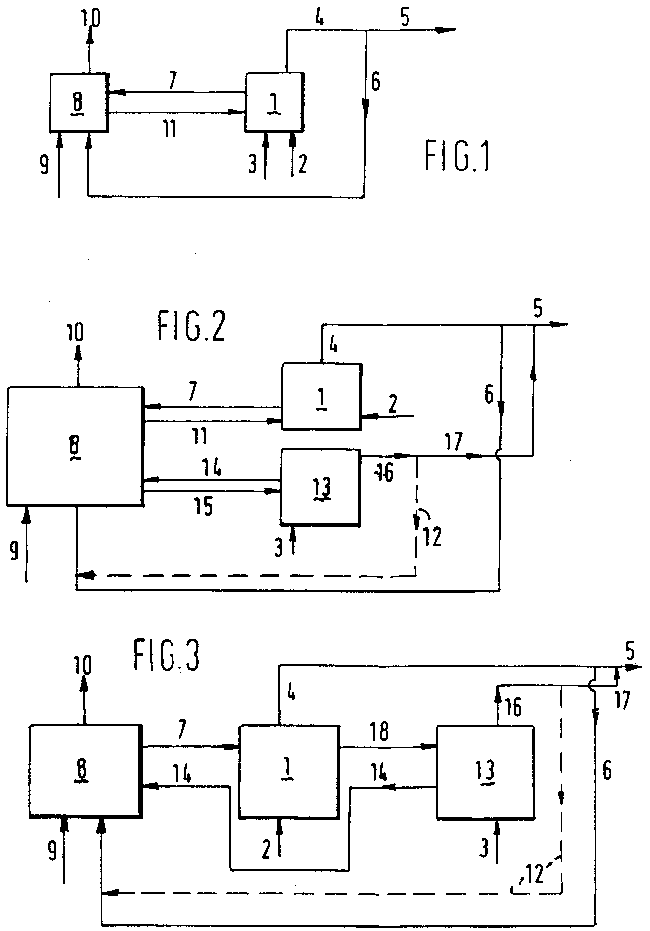

The way in which the solid particles and the carbon (figures 2 and 3) are transported is not included in the diagrams as it has already been discussed at length hereinbefore.

In Figure 1 methane is fed via a line 2 and steam via a line 3 into a reactor 1 and contacted there with a fluidized bed of solid particles supplied via a line 11. The synthesis gas formed is discharged from the reactor via a line 4 and the solid particles are led via a line 7 to a heating vessel 8. With the aid of a separating device (not shown), the synthesis gas is split into two streams 5 and 6. The stream in line 5 is the desired hydrogen-containing gas. The stream in line 6 comprises H₂ and/or CO in a molar ratio which is different from the ratio of the synthesis gas obtained from reactor 1 and any unconverted methane. This stream is led as fuel to heating vessel 8 where it is burned with air from a line 9 in a fluidized bed of the solid particles introduced through line 7. The flue gas formed is discharged via line 10.

In Figures 2 and 3, any numerals which are the same as those used in Figure 1 have the same meaning.

In Figure 2 methane is converted in reactor 1 substantially into carbon and hydrogen. The carbon, together with the solid particles, is transported via line 7 to heating vessel 8 and the hydrogen is discharged via line 4 and separated into two streams 5 and 6. In reactor 13 the carbon, supplied via a line 15, is converted with steam into synthesis gas in the presence of a fluidized bed of solid particles also supplied via line 15 and which are then discharged via a line 14. The synthesis gas leaves reactor 13 via a line 16 and is led via a line 17 to line 5. It is also possible to separate the CO partly or wholly from the synthesis gas, to lead the synthesis gas or hydrogen obtained via line 17 to line 5 and to lead the separated CO to heating vessel 8 via a line 12 drawn as a dashed line. In this case, line 6 is omitted.

In Figure 3 the solid particles and carbon are led from reactor 1 to reactor 13 via a line 18. The solid particles are led from reactor 13 via line 14 to heating vessel 8. After having been heated in heating vessel 8, the solid particles are led via line 7 to reactor 1.

With the process according to the invention as shown schematically in Figures 1, 2 and 3, it is possible to obtain 2630 1 (STP) synthesis gas with a molar ratio of 2 from 1000 1 (STP) CH₄ by employing 1/3 of the resulting hydrogen as fuel, whereas only 2200 1 (STP) synthesis gas of the same composition can be obtained from the same quantity of CH₄ if only CH₄ is used as fuel.

If the heat required in the reaction zone is supplied by direct heating of the reactor or by indirect heating in the reaction zone instead of by heated solid particles according to the process of the invention, the quantity of energy required for the conversion of the same quantity of CH₄ into the same quantity of synthesis gas with a molar H₂/CO ratio of 2 is about 100% greater.

An efficiency of about 85% can be achieved with the process according to the invention.

## Claims

1. Process for the preparation of hydrogen-containing gas from hydrocarbons and an external source of steam and, optionally, CO₂ wherein the hydrocarbons and the steam and, optionally, the CO₂ are continuously converted at elevated temperature and pressure into H₂ and CO by continuously contacting the reactants in at least one reaction zone with a least one fluidized bed of heated solid catalysts and/or inert particles, which are then led continuously to a heating zone where they are continuously heated in a fluidized state by gas heated by combustion of a part of the obtained H₂ and, optionally, of at least a part of the obtained CO with oxygen-containing gas which combustion takes place in the heating zone, and which are finally led continuously back to the reaction zone(s) where they are again contacted with the reactants, and wherein 20-70%v of the H₂ obtained from the reaction zone is led to the heating zone to be combusted therein, and the heating zone provides substantially all the heat for the process.

2. Process according to claim 1 wherein the conversion into H₂ and CO is carried out at a pressure of 1-50 bar and a temperature of 700-1500° C.

3. Process according to claim 1 or 2 wherein a part of the CO obtained is led to the heating zone to be combusted therein.

4. Process according to claim 1 wherein the total quantity of CO obtained is led to the heating zone.

5. Process according to any of the preceding claims wherein the solid particles in the reaction zone(s) are fluidized and kept in a fluidized state by one or more of the reactants.

6. Process according to any of the preceding claims wherein unconverted hydrocarbons are led to the heating zone, where they are combusted such that the hydrocarbons are at least partly converted into carbon and steam, the carbon being adsorbed by the solid particles.

7. Process according to any of the preceding claims wherein catalyst particles are employed as solid particles.

8. Process according to any of the preceding claims wherein two reaction zones are employed.

9. Process according to claim 8 wherein hydrocarbons are converted at least partly into carbon and H₂ in the first reaction zone and the thus formed carbon is converted into H₂ and CO with the aid of steam and/or CO₂ in the second reaction zone.

10. Process according to claim 8 or 9 wherein a part of the solid particles is led from the first reaction zone to the heating zone and back and a part of the solid particles is led from the second reaction zone to the heating zone and back.

## Patentansprüche

1. Verfahren zur Herstellung eines wasserstoffhaltigen Gases aus Kohlenwasserstoffen und einer externen Dampfquelle und gegebenenfalls Kohlendioxid, worin die Kohlenwasserstoffe und der Dampf und gegebenenfalls das Kohlendioxid kontinuierlich bei erhöhter Temperatur und erhöhtem Druck zu Wasserstoff und Kohlenmonoxid umgewandelt werden, indem die Reaktanten in wenigstens einer Reaktionszone kontinuierlich mit wenigstens einem Fließbett aus erhitzten festen Katalysatorteilchen und/oder inerten Teilchen in Kontakt gebracht werden, die anschließend kontinuierlich zu einer Erhitzungszone geführt werden, worin sie kontinuierlich in einem fluidisierten Zustand durch ein Gas erhitzt werden, das durch Verbrennen eines Teiles des erhaltenen Wasserstoffes und gegebenenfalls wenigstens eines Teiles des erhaltenen Kohlenmonoxids mit einem sauerstoffhaltigen Gas erhitzt worden ist, welche Verbrennung in der Erhitzungszone erfolgt und welche Teilchen schließlich kontinuierlich zu der Reaktionszone bzw. zu den Reaktionszonen zurückgeführt werden, worin sie erneut mit den Reaktanten in Kontakt gebracht werden, und worin 20-70 Volums-% des erhaltenen Wasserstoffes aus der Reaktionszone zur Erhitzungszone geführt werden, um darin verbrannt zu werden, und worin die Erhitzungszone im wesentlichen den gesamten Wärmebedarf für das Verfahren liefert.

2. Verfahren nach Anspruch 1, worin die Umwandlung zu Wasserstoff und Kohlenmonoxid bei einem Druck von 1-50 bar und einer Temperatur von 700-1500°C ausgeführt wird.

3. Verfahren nach Anspruch 1 oder 2, worin ein Teil des erhaltenen Kohlenmonoxids zur Erhitzungszone geführt wird, um darin verbrannt zu werden.

4. Verfahren nach Anspruch 1, worin die Gesamtmenge des erhaltenen Kohlenmonoxids zur Erhitzungszone geführt wird.

5. Verfahren nach einem der vorstehenden Ansprüche, die festen Teilchen in der Erhitzungszone bzw. in den Erhitzungszonen durch einen oder mehrere der Reaktanten fluidisiert und im fluidisierten Zustand gehalten werden.

6. Verfahren nach einem der vorstehenden Ansprüche, worin nicht umgewandelte Kohlenwasserstoffe zur Erhitzungszone geführt werden, worin sie derart verbrennt werden, daß die Kohlenwasserstoffe zumindest teilweise zu Kohlenstoff und Dampf umgewandelt werden, wobei der Kohlenstoff durch die festen Teilchen adsorbiert wird.

7. Verfahren nach einem der vorstehenden Ansprüche, worin als feste Teilchen Katalysatorteilchen verwendet werden.

8. Verfahren nach einem der vorstehenden Ansprüche, worin zwei Reaktionszonen angewendet werden.

9. Verfahren nach Anspruch 8, worin die Kohlenwasserstoffe in der ersten Reaktionszone zumindest teilweise zu Kohlenstoff und Wasserstoff umgewandelt werden und der solcherart gebildete Kohlenstoff in der zweiten Reaktionszone mit Hilfe von Dampf und/oder Kohlendioxid zu Wasserstoff und Kohlenmonoxid konvertiert wird.

10. Verfahren nach Anspruch 8 oder 9, worin ein Teil der festen Teilchen aus der ersten Reaktionszone zur Erhitzungszone und zurückgeführt wird und ein Teil der festen Teilchen aus der zweiten Reaktionszone zur Erhitzungszone und zurückgeführt wird.

## Revendications

1. Procédé de préparation d'un gaz contenant de l'hydrogène à partir d'hydrocarbures et une source externe de vapeur d'eau et éventuellement de CO₂, dans lequel les hydrocarbures et la vapeur d'eau et éventuellement le CO₂ sont transformés de manière continue à température et pression élevées en H₂ et CO par mise en contact d'une manière continue des réactifs dans au moins une zone de réaction avec au moins un lit fluidisé de catalyseurs solides chauffés et/ou de particules inertes, que l'on conduit ensuite d'une manière continue à une zone de chauffage dans laquelle elles sont chauffées de manière continue dans un état fluidisé par un gaz chauffé par combustion d'une partie de l'hydrogène obtenu et éventuellement d'une partie du CO obtenu avec un gaz contenant de l'oxygène, cette combustion ayant lieu dans la zone de chauffage et que l'on ramène finalement de manière continue à la zone ou aux zones de réaction où on les met de nouveau en contact avec les réactifs et où 20-70%v de l'hydrogène obtenu provenant de la zone de réaction sont conduits dans la zone de chauffage pour y être brûlés et la zone de chauffage fournit sensiblement la totalité de la chaleur nécessaire au procédé.

2. Procédé selon la revendication 1, dans lequel la conversion en H₂ et CO est effectuée à une pression de 1-50 bars et à une température de 700-1500°C.

3. Procédé selon la revendication 1 ou 2, dans lequel une partie du CO obtenu est amenée à la zone de chauffage pour y être brûlée.

4. Procédé selon la revendication 1, dans lequel la totalité du CO obtenu est amenée à la zone de chauffage.

5. Procédé selon l'une quelconque des revendications précédentes, dans lequel les particules solides dans la zone ou les zones de réaction sont fluidisées et maintenues dans un état fluidisé par un ou plusieurs des corps en réaction.

6. Procédé selon l'une quelconque des revendications précédentes, dans lequel les hydrocarbures non transformés sont amenés à la zone de chauffage où ils sont brûlés de manière que les hydrocarbures soient au moins partiellement transformés en carbone et vapeur d'eau, le carbone étant absorbé par les particules solides.

7. Procédé selon l'une quelconque des revendications précédentes, dans lequel les particules de catalyseur sont utilisées comme particules solides.

8. Procédé selon l'une quelconque des revendications précédentes, dans lequel on utilise deux zones de réaction.

9. Procédé selon la revendication 8, dans lequel les hydrocarbures sont transformés au moins partiellement en carbone et H₂ dans la première zone de réaction et le carbone ainsi formé est transformé en H₂ et CO à l'aide de vapeur d'eau et/ou de CO₂ dans la deuxième zone de réaction.

10. Procédé selon la revendication 8 ou 9, dans lequel une partie des particules solides est amenée de la première zone de réaction à la zone de chauffage et en retour et une partie des particules solides est amenée de la deuxième zone de réaction à la zone de chauffage et en retour.
